# EUROPEAN PATENT APPLICATION

(11) **EP 2 535 622 A1**
(43) Date of publication of application: **19.12.2012**
(21) Application number: 11169949.2
(22) Date of filing: 15.06.2011
(51) Int. Cl.: F16K 3/26

(54) **Valve assembly**

(71) Applicant: Delphi Technologies Holding S.à.r.l., 4940 Bascharage (LU)
(72) Inventor: Marechal, Michel, 41150 Chouzy Sur Cisse (FR); Sauvage, Frederic, 45190 Beaugency (FR); Bellamy, Pascal, 41120 Chailles (FR); Breant, Christophe, 41000 Saint Sulpice (FR)
(74) Representative: Gregory, John David Charles

(57) **Abstract**

A valve assembly for controlling the rate of flow of fluid between a valve inlet (18) and a valve outlet (22) comprises a valve housing (10), and a spool valve member (14) that is movable axially within a valve bore (12) provided in the valve housing (10) in an opening direction and a closing direction. The spool valve member (14) is provided with a blind bore (28), the open end of which communicates with the valve outlet, and at least one opening (32, 34; 40; 50, 52, 54, 56) into the blind bore, the at least one opening communicating, to a variable degree dependent on the axial position of the spool valve member (14) within the valve bore (12), with the valve inlet (18). The valve inlet (18) comprises a first boundary (24) and a second boundary (26), wherein the first boundary (24) acts as a control edge so that for axial positions of the spool valve member (14) in which the opening (30, 32; 40; 50, 52, 54, 56) does not overlap the control edge there is no flow into the outlet (22). A blind end (30) of the blind bore (28) is positioned, for all positions of the spool valve member (14) within the valve bore (12), beyond the second boundary (26) in the opening direction of the spool valve member (14).

## Description

### Field of the Invention

This invention relates to a valve assembly for controlling the flow of fluid. In particular, but not exclusively, the invention relates to a valve assembly suitable for use as an inlet metering valve for a high pressure fuel pump of a high-pressure fuel injection system, such as a common rail fuel injection system.

### Background Art

In a high pressure common rail fuel injection system, fuel is pumped to a common rail from a storage tank by a fuel pump assembly. The fuel pump assembly includes a low-pressure transfer pump, which serves to convey fuel from the tank to the pump assembly, and a high-pressure pump which elevates the pressure of the fuel to the injection pressure, typically of the order of 2000 bar or more. Fuel is conveyed from the tank to the pump assembly by way of a low-pressure fuel line, and from the pump assembly to the rail by way of a high-pressure fuel line 30.

An inlet metering valve, under the control of the engine control unit, is provided between the transfer pump and the high-pressure pump. The inlet metering valve determines how much fuel reaches the high-pressure pump, for subsequent pressurisation and delivery to the rail.

The fuel pressure in the rail is regulated to a target value by the electronic control unit which determines the fuel pressure in the rail and, .when the rail pressure is less than the target value, opens the inlet metering valve so that the high-pressure pump delivers fuel at high pressure to the rail. When the rail pressure is more than the target value, the engine control unit closes the inlet metering valve so that the fuel pressure in the rail can decay as fuel is delivered through the injectors.

In practice, the inlet metering valve is configured to allow a variable flow from the transfer pump to the high-pressure pump within the range from fully-open to fully-closed, so as to permit accurate control of the rail pressure. The inlet metering valve includes a spool valve member which is movable axially within a sleeve to control the degree of communication between an inlet flow path and an outlet flow path through the valve assembly. In operation, the electronic control unit selects the appropriate flow rate through the inlet metering valve by adjusting the magnitude or other property of the signal, typically a current signal, that is supplied to an actuator of the inlet metering valve.

When the inlet metering valve is fully open, the rate of increase of the rail pressure is maximised. To reduce the rate of increase of the rail pressure, the flow through the inlet metering valve is reduced to throttle fuel flow to the high-pressure pump. In this way, accurate control of the pressure in the rail can be achieved. For example, when pressurising the rail, the flow through the inlet metering valve can be gradually reduced as the rail pressure approaches its target value so as to avoid the rail pressure overshooting the desired target value. Also, in steady-state engine operating conditions, the inlet metering valve can be set to an appropriate level so that the fuel delivered to the high-pressure pump equals the amount delivered to the injectors of the fuel system plus any internal leakages, in order to maintain a steady fuel rail pressure.

It is desirable for repeatability and accuracy of control for the output flow rate through the inlet metering valve to be linear with the current signal that is applied to control the valve. A problem has been observed in known inlet metering valves that the output flow rate linearity is sensitive to the relative geometries and positions of the spool valve member and the sleeve.

It is an aim of the present invention to provide an improved valve assembly, suitable for use as an inlet valve of a high pressure fuel injection system, in which the aforementioned problem is reduced or alleviated.

### Summary of the Invention

According to a first aspect of the invention, there is provided a valve assembly for controlling the rate of flow of fluid between a valve inlet and a valve outlet, the valve assembly comprising a valve housing, and a spool valve member that is movable axially within a valve bore provided in the valve housing in an opening direction and a closing direction. The spool valve member is provided with a blind bore, the open end of which communicates with the valve outlet, and at least one opening into the blind bore which communicates, to a variable degree dependent on the axial position of the spool valve member within the valve bore, with the valve inlet. The valve inlet comprises a first boundary and a second boundary, wherein the first boundary acts as a control edge so that for axial positions of the spool valve member in which the at least one opening does not overlap the control edge there is no flow into the valve outlet. A blind end of the blind bore is positioned, for all positions of the spool valve member within the valve bore, beyond the second boundary in the opening direction of the spool valve member.

In a preferred embodiment, the valve inlet comprises an inlet annulus provided in the valve bore which is defined by the first and second boundaries. The first boundary and the second boundary effectively define a flow depth for fuel as it flows radially into the valve bore from the inlet annulus.

In one embodiment, the or each of the openings is provided in the end of the spool valve member.

In one embodiment, the or each of the openings is defined by a V-shaped groove. Alternatively, the or each of the openings may be defined by a U-shaped groove.

Regardless of the shape of the openings, the spool valve member may be provided with a plurality of such openings, preferably arranged at equi-angularly spaced locations around the circumference of the spool valve member, to define a plurality of flow paths for fuel between the valve inlet and the blind bore and, hence, the valve outlet.

The spool valve member is provided with a further drilling (or drillings), one end of which opens into the blind end of the bore to permit fuel to flow between the blind bore and the end of the spool valve member remote from the opening(s). It will therefore be appreciated that the reference to the spool valve member having a "blind bore" is made in the context of it being a bore which has been formed (for example by milling, reaming or drilling) to a specified depth (the depth defining the position of the blind end), but that flow through the blind bore is still possible by virtue of the further drilling (or drillings) in communication with that blind end.

The valve assembly of the invention is particularly suitable for use in a high pressure common rail fuel injection system for controlling the rate of flow of fuel to a high pressure fuel pump of the system. In this application, the valve inlet receives fuel from a source of fuel at relatively low pressure (e.g. transfer pressure) and delivers fuel via the valve outlet to the high pressure fuel pump at a flow rate that is dependent upon a control signal (e.g. current) that is supplied to an actuator of the valve assembly.

The valve assembly of the invention overcomes the problem encountered with existing valve assemblies of the aforementioned type by the provision of the bore within the spool valve member which extends at least beyond the second boundary of the inlet for all operating positions of the spool valve member within the valve bore.

A problem with known valve assemblies of the aforementioned type is that, for positions of the spool valve member in which fuel is able to flow through the valve assembly, between the inlet and the outlet, a restricted flow path exists between the inlet annulus and the openings in the spool valve member, the restriction being greater for positions of the spool valve member in which the degree of overlap between the inlet annulus and the openings is smaller.

The presence of the restriction results in a highly accelerated flow of fuel (referred to as a "jet flow") which results in a local low pressure in the region of the restriction. A consequence of the low pressure acting on the spool valve member in this region is that the spool valve member can be caused to move, either angularly or axially, so as to disturb the desirable linear relationship between the actuator control signal and the flow rate through the valve assembly. By providing the spool valve member with a bore of increased depth, in which the blind end of the bore extends beyond the control edge of the inlet for all positions of the spool valve member, the effect of such jet forces can be minimised. This is because the blind end of the spool bore is displaced significantly from the boundary of the inlet annulus, and, hence, is displaced significantly from the region of flow restriction defined between the inlet annulus and the openings in the spool valve member. Hence, in the present invention, the linearity of control of the valve assembly is improved.

Preferably, the valve housing takes the form of a sleeve.

In one embodiment, the valve outlet is defined, at least in part, by the valve bore.

The valve assembly preferably comprises a spring which serves to bias the spool valve member in the opening direction.

The valve assembly may further comprise an actuator which is operable to move the spool valve member in the closing direction, against the force of the spring, on application of an actuator control signal.

In another embodiment, the actuator may be configured to operate the spool valve member in the opening direction (i.e. in the reverse sense). For example, the spool valve member may be spring biased closed (i.e. the spring acts in the closing direction) and may be operable by means of the actuator to move, against the spring force, in the opening direction.

According to a second aspect of the invention, there is provided a high pressure fuel pump for use in a high pressure fuel injection system comprising a valve assembly of the first aspect of the invention.

It will be appreciated that preferred and/or optional features of the first aspect of the invention may be incorporated alone or in appropriate combination in the fuel pump of the second aspect.

### Brief Description of the Drawings

Embodiments of the present invention will now be described, by way of example only, with reference to Figures 1 to 6 of the accompanying drawings, in which:
Figure 1(a) is a cross-sectional view of an upper part of a valve assembly of the present invention, and Figure 1(b) is a cross-sectional view of an upper part of a valve assembly known in the prior art, by way of comparison with Figure 1 (a);
Figure 2 is a cross-sectional view of a spool valve member of the valve assembly in Figure 1(a),
Figure 3 is a cross sectional view of a spool valve member of the known valve assembly in Figure 1(b), for comparison with Figure 2;
Figure 4 is a perspective view of the spool valve member in Figure 2;
Figure 5 is a cross sectional view of a spool valve member of an alternative embodiment of the invention; and
Figure 6 is a perspective view of a spool valve member of a still further embodiment of the invention.

### Detailed Description of the Preferred Embodiments

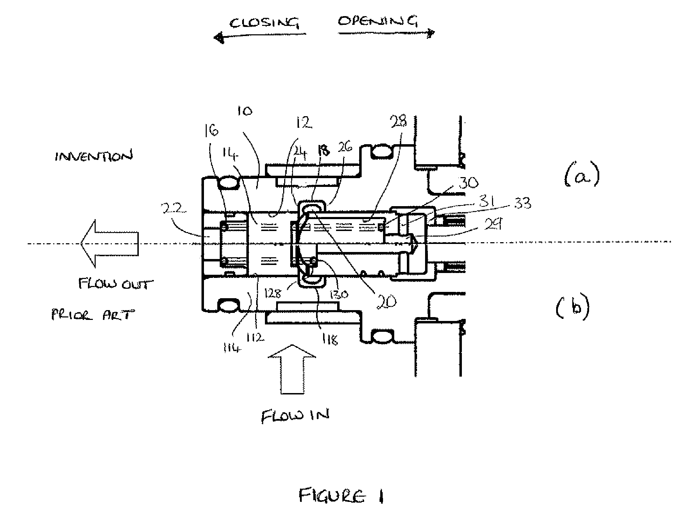

Figure 1(a) illustrates the structure of the valve assembly of one embodiment of the invention in comparison with the structure of a known valve assembly, as shown in Figure 1(b). In the invention of Figure 1(a) a valve assembly for use in a high pressure common rail fuel injection system includes a valve housing 10 in the form of a sleeve having an internal valve bore 12 and a spool valve member 14 which is received within the bore 12 and which is axially movable within the bore 14 in opening and closing directions under the influence of a spring 16 and an actuator system (not shown), respectively. Typically, the actuator system includes an electronically operated actuator to which a control signal in the form of a current is applied to control movement of the spool valve member 14 axially within the valve bore 12 between fully open and fully closed positions. The spring 16 acts on the spool valve member 14 in the opening direction of the spool valve (i.e. to the right in the illustration shown) to urge it into a fully open position in which a maximum rate of flow of fuel passes through the valve assembly.

When the actuator is energised by applying a control current, the spool valve member 14 is caused to move in the closing direction (i.e. to the left in the illustration shown) towards its fully closed position, against the spring force, in which substantially no fuel flows through the valve assembly. A variable range of positions of the spool valve member 14 within the sleeve 10 exist between the fully open and fully closed positions to provide a variable range of flow rates through the valve assembly.

The valve assembly further includes an inlet means including at least one inlet (not shown) which communicates with an inlet annulus 18 provided in the internal surface of the valve bore 12. In use, the inlet annulus 18 communicates with a plurality of inlet drillings 20 (only one of which is visible in Figure 1(a)) which receive fuel from a fuel supply at relatively low pressure, such as a transfer pump. The valve bore 12 defines an outlet 22 for fuel which delivers fuel to a high pressure fuel pump of the fuel injection system in circumstances in which the valve assembly is at least partially open.

The inlet annulus 18 is defined by first and second boundaries which define the depth of fuel flow through the annulus as it flows radially into the valve bore 12. The first boundary is to the left in the orientation shown in Figure 1(a) (i.e. closest to the spring 16) and the second boundary is to the right (i.e. farthest from the spring 16). The first boundary of the annulus defines a control edge for the spool valve member 14. Together, the first and second boundary define a width of the inlet flow path into the sleeve bore.

Figure 1(b) has similar features to the invention of Figure 1(a) in that both valve assemblies include the valve housing 10, the valve bore 12, the spool valve member 14, the spring 16, the inlet annulus 18, the inlet drillings 20 and the outlet 22.

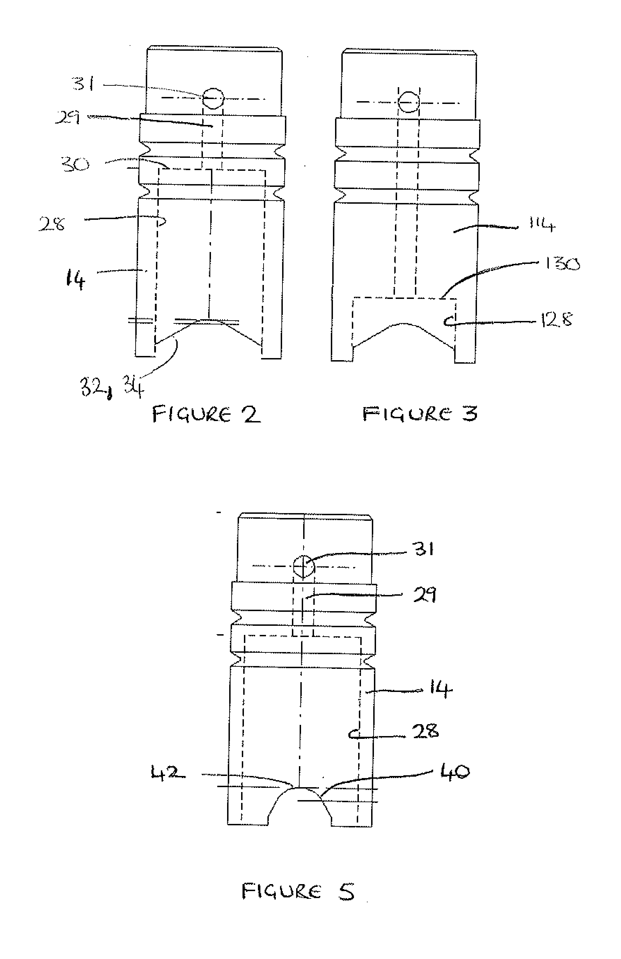

The spool valve member is further provided with a blind bore 28 having a blind end 30. Referring to Figures 2 and 3, it can be seen that the embodiment of the invention in Figure 2 differs from the known valve assembly in Figure 3 with regard to the blind bore 28 which, in the invention, is of increased length. In the known spool valve member 114 in Figure 3, the blind end 130 of the bore 128 is much shorter. In particular, referring again to Figure 1(a), the position of the blind end 30 of the blind bore 28 of the invention is such that for all positions of the spool valve member 14 between the fully open position (i.e. fully to the right) and the fully closed position (fully to the left), the blind end 30 of the bore 28 is located beyond, in the opening direction, the second boundary 26 of the inlet annulus 18. This is not the case in the known spool valve member 114 of Figure 1 (b) and Figure 3 where, for all positions of the spool valve member 114 within the bore 112, the blind end of the bore 128 is located between or within the boundaries of the inlet annulus 118 for all positions of the spool valve member 14.

The spool valve member 14 of the invention is further provided with a blind axial drilling 29 which communicates, at its open end, with the blind end of the spool bore 28 and, towards its blind end, with cross drillings 31 provided in the spool valve member 14. Considering the bore 28 and the drilling 29 together, a passage is therefore defined in the spool valve member 14 comprising a region of relatively large diameter (denoted by the bore 28) and a region of relatively small diameter (denoted by the drilling 29), with a step transition in diameter being defined between the two regions at surface 30.

The cross drillings 31 communicate with a chamber 33 defined by the valve bore 12. The purpose of the drillings 29, 31 and the chamber 33 is to allow flow between the blind bore 28 and the end of the spool valve member 14 remote from the valve outlet. This ensures the spool valve member 14 is pressure balanced, and also allows the passage of fuel to a downstream plunger (not shown), which forms part of the actuator system, for lubrication purposes.

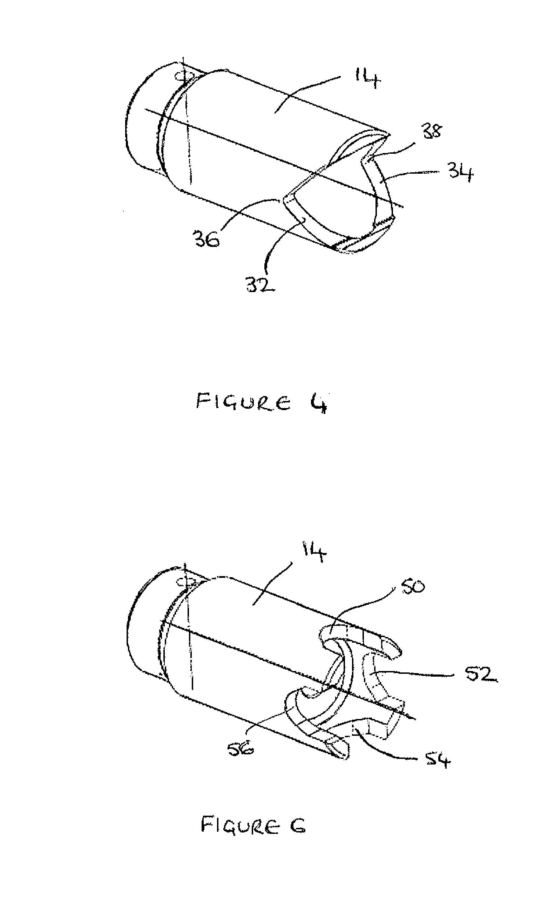

As can be seen most clearly in Figures 2 and 4, the spool valve member 14 is further provided with a flow path which permits communication between the inlet annulus 18 and the outlet 22 of the valve assembly. The flow path is defined by first and second openings 32, 34 in the form of V-shaped grooves provided in the end surface of the spool valve member 14. Each V-shaped groove terminates in a narrow base 36, 38 and opens, at its wide end, into the valve bore 12. When they are brought into communication with the inlet annulus 18, the V-shaped openings 36, 38 in the spool valve member 14 permit fuel to flow through the wall of the spool valve member 14, therefore allowing fuel that is supplied to the inlet annulus 18 to flow into the spool bore 28 and, hence, into the outlet 22. The degree of overlap between the inlet annulus 18 and the openings 32, 34 determines the rate of flow of fuel between the annulus 18 and the valve bore 12 and, hence, the rate of flow of fuel through the valve assembly.

For axial positions of the spool valve member 14 for which the wall of the spool valve member covers the inlet annulus 18 and the narrow ends 36, 38 of the V-shaped openings 32, 34 do not overlap with the first boundary 24, there is no communication between the inlet annulus 18 and the openings 32, 34 and there is no flow through the valve assembly. This is the closed position of the valve assembly in which the actuator is fully energised and the spool valve member 14 adopts a position fully to the left in the orientation of Figure 1(a). For axial positions of the spool valve member 14 within the valve bore 12 for which the narrow ends 36, 38 of the V-shaped openings 32, 34 overlap with the first boundary 24 and uncover the inlet annulus 18, there is a flow of fuel through the valve assembly. In this condition, the flow rate through the valve assembly is determined by the degree of overlap between the annulus 18 and the openings 32, 34. The position of the spool valve member 14 within the valve bore 12 therefore determines the degree of overlap between the inlet annulus 18 and the openings 32, 34 and, thus, determines the rate of flow of fuel through the valve assembly.

Referring again to Figure 1(a), from the fully open position of the valve assembly where the actuator is fully de-energised and the spool valve member 14 is fully to the right in the orientation shown, if it is required to reduce the flow rate through the valve assembly the actuator is partially energised to cause the spool valve member 14 to move in the closing direction (i.e. to the left in the illustration shown), compressing the valve spring 16 and reducing the degree of overlap between the inlet annulus 18 and the openings 32, 34. To further reduce the flow rate through the valve assembly, the actuator is energised further to move the spool valve member 14 still further in the closing direction, further compressing the spring 16 and further reducing the extent of overlap between the inlet annulus 18 and the openings 32, 34.

Once in the fully closed position, with the actuator fully energised, there is substantially no flow through the valve assembly as the V-shaped openings 32, 34 in the spool valve member 14 have been moved so far in the closing direction that they do not overlap with the inlet annulus 18.

In order to increase the flow rate through the valve assembly again, the actuator is de-energised causing the spool valve member 14 to move in the opening direction, under the influence of the spring 16. Once the narrow ends 36, 38 of the V-shaped openings 32, 34 pass the control edge defined by the first boundary 24 of the inlet annulus 18, fuel is able to flow from the inlet annulus 18, through the openings 32, 34 and into the spool bore 28 and, hence, into the valve outlet 22. To further increase the flow rate through the valve assembly the actuator is de-energised further, causing the spool valve member 14 to move still further in the opening direction, increasing the degree of overlap between the inlet annulus 18 and the openings 32, 34 and increasing the flow rate through the valve assembly.

It is an important benefit of the invention that there is a substantially linear relationship between the actuator signal that is applied to actuate the spool valve member 14 and the output flow rate through the valve assembly. In other words, the valve assembly has a linear output flow response with actuator signal. The inventors have discovered with surprising effect that by moving the blind end 30 of the spool bore 28 to a position removed from the region of restriction between the inlet annulus 18 and the openings 32, 34, the linearity of response of the valve assembly is improved greatly compared with the known valve assembly in Figures 1(b) and 3. This can be explained by considering the jet flow forces that arise through the small restriction between the inlet annulus 18 and the openings 32, 34. In the prior art of Figure 1 (b) and Figure 3, the blind end 130 of the spool bore 128 is subjected to jet flow forces which, as a result, generate an additional force on the spool valve member 14 that can cause axial movement, against the spring force, that is not demanded by the applied actuator signal. In the present invention, however, because the blind end 30 of the spool bore 28 is displaced from the region of restriction, and is at all times beyond the position of the second boundary 26 of the inlet annulus 18, such jet force effects are limited.

Another embodiment of the invention is shown in Figure 5, in which the increased length of the spool bore 28 is again provided but in which the shape of the openings in the wall of the spool valve member 14 is different. In this embodiment the openings 40 (only one of which is visible in Figure 5) are U-shaped, as opposed to V-shaped, each with a part-spherical base 42 at its narrow end and opening, at its wide end, at the end of the spool valve member 14.

As illustrated in Figure 6, a greater number of openings 50, 52, 54, 56 may be provided in the spool valve member 14 (i.e. four in the illustration shown). A variety of different combinations of opening shapes and number of openings may be provided, whilst still achieving the same benefits of the aforementioned embodiments, providing that (i) the shape and number of openings define the expected overlap between the inlet annulus 18 and the area of the spool opening(s) 50, 52, 54, 56 and (ii) the spool bore 28 is always of sufficient length to ensure that for all positions of the spool valve member 14 within the valve bore 12 the blind end 30 of the spool bore 28 is located beyond the second boundary 26 of the inlet annulus 18 so as to minimise the detrimental effects of undesirable jet forces impacting the blind end 30 of the bore 28.

## Claims

1. A valve assembly for controlling the rate of flow of fluid between a valve inlet (18) and a valve outlet (22), the valve assembly comprising:
a valve housing (10),
a spool valve member (14) that is movable axially within a valve bore (12) provided in the valve housing (10) in an opening direction and a closing direction,
the spool valve member (14) being provided with a blind bore (28), the open end of which communicates with the valve outlet, and at least one opening (32, 34; 40; 50, 52, 54, 56) into the blind bore, the at least one opening communicating, to a variable degree dependent on the axial position of the spool valve member (14) within the valve bore (12), with the valve inlet (18),
the valve inlet (18) comprising a first boundary (24) and a second boundary (26), wherein
the first boundary (24) acts as a control edge so that for axial positions of the spool valve member (14) in which the opening (30, 32; 40; 50, 52, 54, 56) does not overlap the control edge there is no flow into the valve outlet (22),
and wherein a blind end (30) of the blind bore (28) is positioned, for all positions of the spool valve member (14) within the valve bore (12), beyond the second boundary (26) in the opening direction of the spool valve member (14).

2. A valve assembly as claimed in claim 1, wherein the spool valve member is provided with a further drilling (29), one end of which opens into the blind end (30) of the bore (28) to permit fuel to flow between the blind bore (28) and the end of the spool valve member (14) remote from the valve outlet (22).

3. A valve assembly as claimed in claim 1 or claim 2, wherein the valve inlet comprises an inlet annulus provided in the valve bore (12) which is defined by the first and second boundaries (24, 26).

4. A valve assembly as claimed in any of claims 1 to 3, wherein the valve housing (10) takes the form of a sleeve.

5. A valve assembly as claimed in any of claims 1 to 4, wherein the at least one opening (32, 34; 40; 50, 52, 54, 56) is provided in an end of the spool valve member (14).

6. A valve assembly as claimed in claim 5, wherein the or each of the openings is a V-shaped groove (32, 34; 50, 52, 54, 56).

7. A valve assembly as claimed in claim 5, wherein the or each of the openings is a U-shaped groove (40).

8. A valve assembly as claimed in any of claims 1 to 8, wherein the spool valve member is provided with a plurality of openings (32, 34; 40; 50, 52, 54, 56) arranged at equi-angularly spaced locations around the circumference of the spool valve member (14).

9. A valve assembly as claimed in any of claims 1 to 8, wherein the valve outlet is defined, at least in part, by the valve bore (12).

10. A valve assembly as claimed in any of claims 1 to 9, further comprising a spring (16) which serves to bias the spool valve member (14) in the opening direction.

11. A valve assembly as claimed in claim 10, further comprising an actuator which is operable to move the spool valve member (14) in the closing direction, against the force of the spring (16), on application of an actuator control signal.

12. A fuel pump for use in a high pressure fuel injection system, including a valve assembly as claimed in any of the preceding claims.
